(19) Europäisches Patentamt
European Patent Office
Office européen des brevets

(11) Veröffentlichungsnummer: **0 453 884 B1**

(12) **EUROPÄISCHE PATENTSCHRIFT**

(45) Veröffentlichungstag der Patentschrift: **26.10.94**

(51) Int. Cl.⁵: **C09B 62/04**, D06P 1/38

(21) Anmeldenummer: **91105748.7**

(22) Anmeldetag: **11.04.91**

(54) **Triphendioxazinfarbstoffe.**

(30) Priorität: **24.04.90 DE 4012954**

(43) Veröffentlichungstag der Anmeldung:
**30.10.91 Patentblatt 91/44**

(45) Bekanntmachung des Hinweises auf die Patenterteilung:
**26.10.94 Patentblatt 94/43**

(84) Benannte Vertragsstaaten:
**CH DE FR GB LI**

(56) Entgegenhaltungen:
**DE-A- 3 423 581**
**DE-A- 4 005 551**
**US-A- 4 780 107**

(73) Patentinhaber: **BAYER AG**
**D-51368 Leverkusen (DE)**

(72) Erfinder: **Jäger, Horst, Dr.**
**Carl-Rumpff-Strasse 37**
**W-5090 Leverkusen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft neue Triphendioxanzinfarbstoffe, Verfahren zu ihrer Herstellung und ihre Verwendung zum Färben und Bedrucken von cellulosehaltigen und amidgruppenhaltigen Materialien.

Die neuen Triphendioxazinfarbstoffe sind durch die Formel

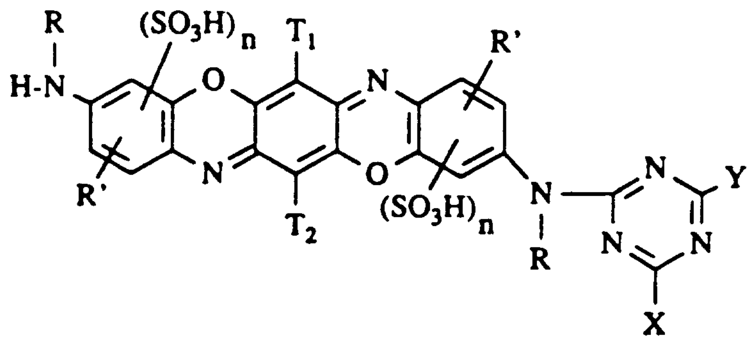 (1)

allgemein definiert,
in welcher

| | |
|---|---|
| R | für Wasserstoff oder gegebenenfalls substituiertes $C_1$-$C_6$-Alkyl steht, |
| R' | für Wasserstoff oder einen Substituenten steht, |
| $T_1$ und $T_2$ | jeweils für Wasserstoff, Chlor, Brom, gegebenenfalls substituiertes $C_1$-$C_4$-Alkyl, gegebenenfalls substituiertes $C_1$-$C_4$-Alkoxy, gegebenenfalls substituiertes Phenyl oder gegebenenfalls substituiertes Phenoxy stehen, |
| Y | für eine gegebenenfalls substituierte Aminogruppe steht, |
| X | für eine jeweils gegebenenfalls substituierte Amino-, Thioether- oder Ethergruppe, für Wasserstoff, gegebenenfalls substituiertes niederes Alkyl oder gegebenenfalls substituiertes Phenyl steht und |
| n | für 0 oder 1 steht, |

wobei
für den Fall daß n für 1 steht, die Sulfogruppe jeweils in ortho-Stellung zu den Substituenten

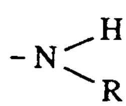 oder 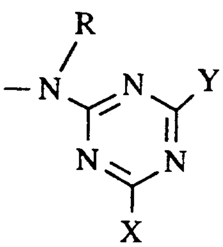

steht,
und wobei für die gegebenenfalls substituierten Aminogruppen in der Definition von X und Y Vinylsulfon und $\beta$-substituiertes Ethylsulfon sowie weiterhin chromophore Reste aus der Azo-, Formazan-, Anthrachinon-, Phthalocyanin- und Dioxazin-Farbstoffreihe als Substituenten ausgenommen sind.

Beispiele für den Substituenten R sind: $CH_3$, $C_2H_5$, n-$C_3H_7$, i-$C_3H_7$, n-$C_4H_9$, n-$C_6H_{13}$, die beispielsweise durch OH, $OCH_3$, $OC_2H_5$, COOH, $SO_3H$, $OSO_3H$, CN oder Chlor substituiert sein können.

Geeignete Substituenten R' sind beispielsweise Halogen wie beispielsweise Chlor, Carboxy sowie jeweils gegebenenfalls substituiertes $C_1$-$C_4$-Alkyl oder $C_1$-$C_4$-Alkoxy.

Substituenten für gegebenenfalls substituierten $C_1$-$C_4$-Alkyl und $C_1$-$C_4$-Alkoxy in der Definition von $T_1$ und $T_2$ sind beispielsweise $C_1$-$C_4$-Alkoxy oder -$OSO_3H$.

Substituenten für jeweils gegebenenfalls substituiertes Phenyl und Phenoxy in der Definition von $T_1$ und $T_2$ sind beispielsweise Chlor, Brom, $C_1$-$C_4$-Alkyl, $C_1$-$C_4$-Alkoxy oder -$SO_3H$.

Substituenten der Phenylreste in der Definition von X sind beispielsweise Chlor, Fluor, niederes Alkyl oder niederes Alkoxy.

Beispiele für gegebenenfalls substituierte Aminogruppen in der Definition von Y sind solche der Formel

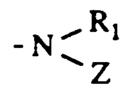 (2)

in welcher

- $R_1$ für Wasserstoff, einen aliphatischen Rest, beispielsweise einen niederen Alkylrest, der gegebenenfalls ein- oder zweifach substituiert ist durch Hydroxy, Sulfato, niederes Alkoxy, Sulfo, Carboxy oder Phenyl; für einen araliphatischen Rest oder einen cycloaliphatischen Rest, beispielsweise Cyclohexyl, steht und
- Z für Wasserstoff einen aliphatischen Rest, beispielsweise einen niederen Alkylrest, der gegebenenfalls durch Hydroxy, niederes Alkoxy, Sulfato, Sulfo und Carboxy substituiert ist oder für einen gegebenenfalls substituierten aromatischen Rest, wie beispielsweise einen Phenyl- oder Naphthylrest, der beispielsweise durch Halogenatome wie Fluor, Chlor, Brom, niederes Alkyl, niederes Alkoxy, Nitro, Sulfo, Carboxy, Sulfamoyl, Carbamoyl, jeweils gegebenenfalls substituiertes Alkylcarbonylamino, Phenylcarbonylamino, Phenylureido, Phenylsulfonylamino, Alkylaminocarbonyl, Phenylaminocarbonyl, Phenylsulfonylamino, Phenoxy, Thiophenoxy, Phenylethenyl, Phenylamino, Phenylsulfonyl, Phenylcarbonyl, Beispiele für Substituenten der gegebenenfalls substituierten Alkylreste in den zusammengesetzten Begriffen wie Alkylcarbonylamino oder Alkylaminocarbonyl in der Definition von Z sind: Sulfo, Carboxy, Methoxy, Hydroxy oder Acetylamino.
  Beispiele für Substituenten der gegebenenfalls substituierten Phenyl- oder Naphthylreste in den zusammengesetzten Begriffen wie Phenylcarbonylamino oder Phenylureido in der Definition von Z sind: Sulfo, Carboxy, niederes Alkyl, niederes Alkoxy, Chlor, Acetylamino, Ureido oder Hydroxy.
  Weiterhin können die in der Definition von Z genannten aromatischen Reste wie beispielsweise Phenyl- oder Naphthylreste durch heterocyclische Reste substituiert sein, die sowohl ankondensiert als auch durch eine einfache Bindung verknüpft sein können.

Weiterhin

- Z für einen gegebenenfalls substituierten araliphatischen Rest steht, wobei als Substituenten beispielsweise in Frage kommen: niederes Alkyl, niederes Alkoxy, Sulfo, Carboxy; oder für einen gegebenenfalls substituierten heterocyclischen Rest steht.

Weiterhin

- Z für Hydroxy, niederes Alkoxy oder für eine gegebenenfalls substituierte Aminogruppe, wie beispielsweise die Aminogruppe, eine Phenylamino- oder niedere Alkylaminogruppe steht,

oder

- $R_1$ und Z stehen gemeinsam mit dem Stickstoffatom, an welches sie gebunden sind für einen gesättigten 3- bis 9-, vorzugsweise 6- bis 8-gliedrigen heterocyclischen Ring, der 1 oder 2 Heteroatome wie Sauerstoff und/oder Stickstoff enthalten kann, wie beispielsweise der Morpholin-, Piperidin- oder Piperazin-Ring.

Beispiele für gegebenenfalls substituierte Aminogruppen in der Definition von X sind solche der Formel (2), wobei die für X und Y stehenden Reste der Formel (2) gleich oder verschieden sein können.

Beispiel für gegebenenfalls substituierte Ethergruppen in der Definition von X sind solche der Formel

$-O-R_3$ (3)

in welcher

- $R_3$ für Wasserstoff oder für gegebenenfalls substituiertes Alkyl steht, wobei als Substituenten beispielsweise in Frage kommen: substituiertes niederes Alkyl. Hydroxy, niederes Alkoxy, Sulfato, Sulfo, Carboxy sowie gegebenenfalls durch Nitro, Sulfo oder Carboxy substituiertes Phenyl.

Beispiele für gegebenenfalls substituierte Thioethergruppen in der Definition von X sind solche der Formel

$-S-R_2$ (4)

in welcher

$R_2$ für gegebenenfalls substituiertes Alkyl steht, wobei als Substituenten beispielsweise in Frage kommen: substituiertes niederes Alkyl, Hydroxy, niederes Alkoxy, Sulfato, Sulfo, Carboxy sowie gegebenenfalls durch Nitro, Sulfo oder Carboxy substituiertes Phenyl oder für Benzthiazol-2-yl steht.

Aliphatische Reste sind ganz generell beispielsweise gegebenenfalls substituierte Alkylreste mit 1 bis 10 C-Atomen, die gegebenenfalls durch Heteroatome bzw. Heteroatomgruppierungen unterbrochen sein können, beispielsweise durch O, N, S, CONH, $SO_2NH$, $SO_2$.

Niedere Alkyl- bzw. Alkoxyreste sind solche mit 1 bis 4 C-Atomen.

Die Reste R, R', $T_1$ und $T_2$ können gleich oder verschieden sein.

Im Rahmen der Formel (1) bevorzugte Farbstoffe entsprechen der Formel

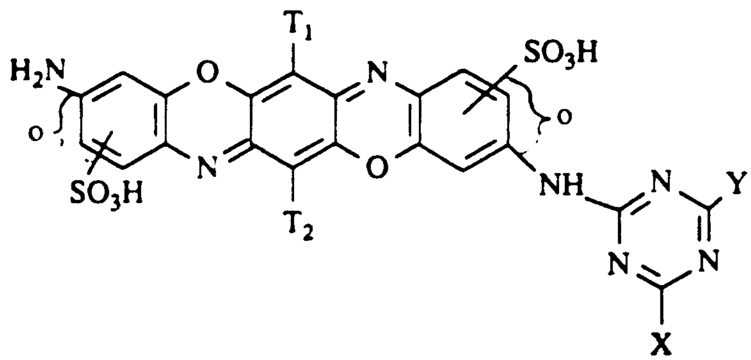

(5)

worin $T_1$, $T_2$, X und Y die oben angegebene Bedeutung haben.

Weiterhin sind Farbstoffe der Formeln (1) oder (5) bevorzugt, in denen $T_1$ und $T_2$ für Chlor oder Methoxy stehen.

Bevorzugt stellt X einen Rest der Formel $-S-R_2$ oder $-O-R_3$ dar,

in welcher

$R_2$ bevorzugt einen Phenylrest, der durch Chlor, Sulfo oder Nitro substituiert sein kann, oder einen niederen Alkylrest, der durch Hydroxy oder Carboxy substituiert sein kann, bedeutet und

$R_3$ bevorzugt ein Wasserstoffatom oder ein niederer Alkylrest oder ein Phenylrest ist, der durch Sulfo oder Carboxy substituiert sein kann.

Der Formelrest X bedeutet weiterhin bevorzugt eine Aminogruppe der Formel $-NR_1Z$,

in welcher

$R_1$ bevorzugt ein Wasserstoffatom oder eine niedere Alkylgruppe bedeutet, die durch eine Carboxy-, Sulfato- oder Sulfogruppe substituiert sein kann und

in welcher

Z bevorzugt ein Wasserstoffatom oder eine niedere Alkylgruppe bedeutet, die durch eine Hydroxy-, Sulfato-, Carboxy-, Sulfo-, niedere Alkoxy-Gruppe, einen Phenylrest oder einen Cyclohexylrest substituiert sein kann.

Weiterhin bevorzugt sind Aminreste X, in denen $R_1$ und Z gemeinsam mit dem Stickstoffatom an welches sie gebunden sind gegebenenfalls unter Einschluß eines weiteren Heteroatoms einen Ring bilden.

Bevorzugt sind Aminoreste Y der Formel (2), in denen

$R_1$ für Wasserstoff und

Z für Reste $Z_1$ oder $Z_2$ steht,

wobei

$Z_1$ für

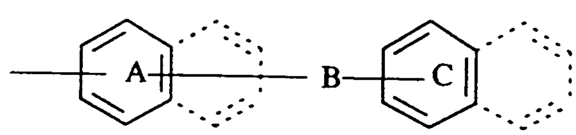

steht,

wobei der Phenylen- bzw. Naphthylenrest A und der Phenyl- bzw. Naphthylrest C substituiert sein kann und

B für eine direkte Bindung oder ein Brückenglied der Formel

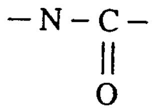 , 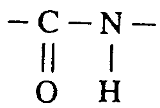 , 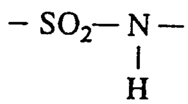 , 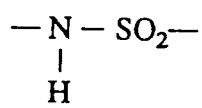 , 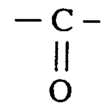 ,

$-SO_2-$ , -S- , -O- ,

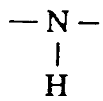 , 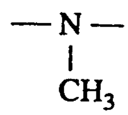 , 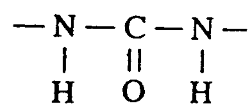 , 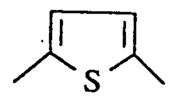 ,

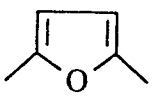 , 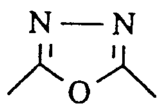 ,

-CH = CH-
steht, und

$Z_2$ für

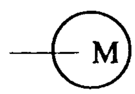

steht,
worin M für den Rest eines mindestens zwei kondensierte 5- oder 6-Ringe enthaltenden heterocyclischen Ringsystems steht,

$Z_2$ steht vorzugsweise für einen der folgenden Reste:

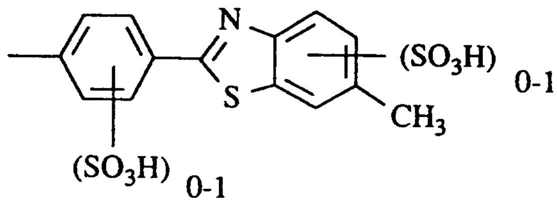

,

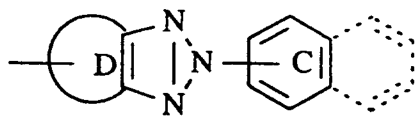

oder

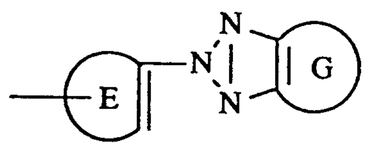

worin

D für den Rest eines gegebenenfalls substituierten Benzol- oder Naphthalinringes steht und der Phenyl- bzw. Naphthylring C substituiert sein kann,

E für einen gegebenenfalls substituierten Phenylen- oder Naphthylenrest und

G für den Rest eines gegebenenfalls substituierten Benzol- oder Naphthalinringes steht.

Ganz generell bevorzugt sind Reste Z, die mindestens eine wasserlöslichmachende Gruppe, insbesondere eine Sulfo- und/oder Carboxygruppe enthalten. Weitere wasserlöslichmachende Gruppen sind die Sulfato oder Disulfimidgruppe.

Vorzugsweise enthält der Rest Z eine bis vier wasserlöslichmachende Gruppen, insbesondere eine Sulfonsäure- und/oder eine Carbonsäuregruppe.

Substituenten der Reste: A, C, D, E, G und M sind beispielsweise: Halogenatome wie Fluor, Chlor oder Brom, $C_1$-$C_4$-Alkyl, $C_1$-$C_4$-Alkoxy, Nitro, Sulfo, Carboxy, Hydroxy, $C_1$-$C_4$-Alkylcarbonylamino, gegebenenfalls durch Chlor, Methoxy, Methyl substituiertes Phenylcarbenylamino, Phenylureido, Ureido.

Gegenstand der Erfindung sind weiterhin Verfahren zur Herstellung der Farbstoffe der Formel (1). Sie sind dadurch gekennzeichnet, daß man entweder

a) 1 Mol eines Triphendioxazinfarbstoffes der Formel

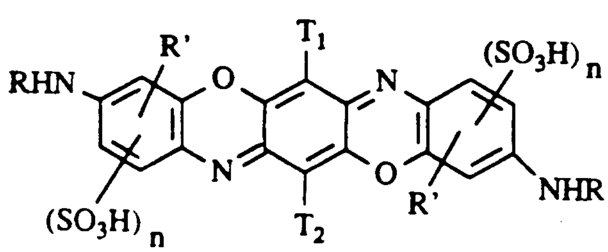

(6)

in welcher

$T_1$, $T_2$, R, R' und n die oben angegebene Bedeutung haben,

mit einem Mol eines Halogentriazins der Formel

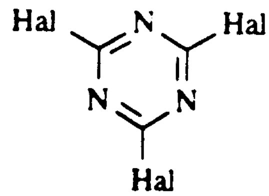

(7)

in welcher

Hal für Fluor, Chlor oder Brom steht,

und mit einem Mol an Verbindung der Formel

$H\text{-}X_1$ (8)

in welcher

$X_1$ für eine jeweils gegebenenfalls substituierte Amino-, Thioether- oder Ethergruppe, vorzugsweise $-SR_2$, $-OR_3$ oder

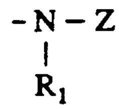

steht,

wobei

$R_1$, $R_2$, $R_3$ und Z die oben angegebene Bedeutung haben,

sowie mit einem Mol an Verbindung der Formel

H-Y (9)

in welcher

Y die oben angegebene Bedeutung hat, vorzugsweise für

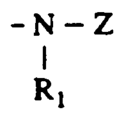

steht,

wobei

$R_1$ und Z die oben angegebenen Bedeutungen haben,

in beliebiger Reihenfolge umsetzt,

oder

b) ein Mol eines Triphendioxazinfarbstoffes der Formel (6) mit einem Mol eines Halogentriazins der Formel (10)

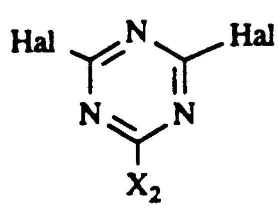

(10)

in welcher

Hal die oben angegebene Bedeutung hat und

$X_2$ für Wasserstoff, niederes Alkyl oder gegebenenfalls durch Chlor, Methyl oder Methoxy substituiertes Phenyl steht,

sowie mit einem Mol an Verbindung (9) in beliebiger Reihenfolge umsetzt.

Die Kondensationsreaktionen der Halogentriazine (7) bzw. (10) mit den Triphendioxazinfarbstoffen (6), den Verbindungen (8) und den Aminen (9) werden im wäßrigen oder wäßrig-organischen oder organischen Medium bei Temperaturen zwischen 0°C und 110°C ausgeführt, wobei gegebenenfalls die bei den Kondensationsschritten freiwerdende Halogenwasserstoffsäure durch Zugabe von säurebindenden Mitteln, wie beispielsweise Alkali- oder Erdalkali-hydrogencarbonaten, -carbonaten, -hydroxiden, -phosphaten oder -boraten abgefangen wird. Der dabei sich einstellende pH-Bereich kann in weiten Grenzen gewählt werden. Die einzelnen Kondensationsschritte werden üblicherweise nacheinander ausgeführt, wobei für den Austausch des ersten Halogenatoms, je nach Reaktivität des Halogentriazins (7) bzw. (10), eine Temperatur zwischen 0°C und 60°C, für den Austausch des zweiten Halogenatoms eine Temperatur zwischen 0°C und 80°C und für den Austausch des dritten Halogenatoms eine Temperatur zwischen 40°C und 110°C gewählt wird.

Wenn auch die einzelnen Kondensationsstufen in beliebiger Reihenfolge ausgeführt werden können, so wird man vorzugsweise zunächst einen Farbstoff (6) mit einem Halogentriazin (7) bzw. (10) zu einem Acylierungsprodukt der Formel (11)

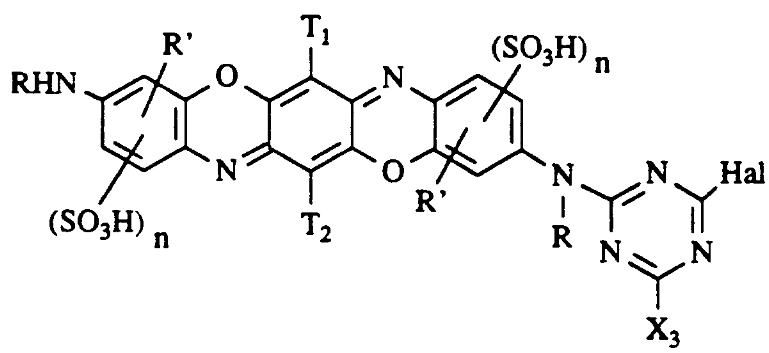

(11)

in welcher

R, R', $T_1$, $T_2$, Hal und n die oben angegebene Bedeutung haben, und

$X_3$ für die Bedeutung von Hal oder $X_2$ steht,

umsetzen und dann mit den Verbindungen (8) bzw. (9) kondensieren, wobei man vorzugsweise für den Austausch des letzten Halogenatoms das Amin mit der größten Basizität bzw. die Verbindung mit der größten Nucleophilie einsetzt.

Weiterhin ist die Verfahrensvariante bevorzugt, bei der zwar die einzelnen Schritte nacheinander aber in einer "Eintopfreaktion" ausgeführt werden.

Für die Kondensationsreaktionen werden die Triphendioxazinfarbstoffe (6) vorzugsweise in Form ihrer neutralen Alkalisalze insbesondere ihrer Lithiumsalze eingesetzt.

Farbstoffe der Formel (6) sind aus der Literatur bekannt. So ist beispielsweise ihre Herstellung in der Europäischen Patentschrift 170 838 beschrieben.

Beispiele für Halogentriazine (7) sind:

2,4,6-Trichlortriazin (Cyanurchlorid)
2,4,6-Trifluortriazin
2,4,6-Tribromtriazin.

Beispiele für Halogentriazine (10) sind:

2,4-Dichlor-6-H-triazin
2,4-Dichlor-6-methyl-triazin
2,4-Dichlor-6-phenyl-triazin.

Eine bevorzugte Bedeutung hat Cyanurchlorid.

Verbindungen der Formel (8) und (9) sind beispielsweise folgende:

Alkohole $HOR_3$ (8):
Methanol, Ethanol, Isopropanol, β-Methoxyethanol, β-Ethoxyethanol, Glykolsäure;
Phenole und Naphthole $HOR_3$ (8):
Phenol, 4-Nitrophenol 4-Sulfophenol, 4-Carboxyphenol, p-Kresol, Salicylsäure, 2-Hydroxy-6-sulfo-naphthalin;

Alkylmercatpane $HSR_2$ (8):
Mercaptoethanol, Mercaptoessigsäure, β-Mercaptopropionsäure, 1-Mercapto-2-hydroxypropan, 1-Hydroxy-2-mercaptopropan;
aryl- und heterocyclische Mercaptane $HSR_2$ (8):
Thiophenol, 4-Nitrothiphenol, 4-Sulfothliophenol, 4-Carboxythiophenol, 2-Mercaptobenzthiazol, 2-Mercaptobenzthiazol-x-sulfonsäure;
aliphatische Amine $HNR_1Z$ (9):
Ammoniak, Methylamin, Ethylamin, Diethylamin, Isopropylamin, Taurin, Methyltaurin, Aminolsulfat, N-Methyl-β-sulfatoethylamin, Ethanolamin, Bis-(β-hydroxyethyl)-amin, β-Methoxyethylamin, Bis-(β-methoxyethyl)-amin, Aminoessigsäure, Sarkosin, β-Aminopropionsäure, Aminobernsteinsäure, Diethylentriamin, Triethylentetramin, Tetraethylenpentamin, Pentaethylenhexamin, N-Methylaminomethansulfonsäure, Bis-(β-sulfatoethyl)-amin β-(Sulfatoethyl)-β'-aminoethyl-sulfon 3-Amino-sulfolan;
aromatische Amine $HNR_1Z$ (9):
Anilin, p-Toluidin, 4-Methoxyanilin, 4-Ethoxyanilin, 2-Methoxyanilin, N-Ethylanilin, m-Sulfanilsäure, 4-Aminophenyl-ω-methansulfonsäure, p-Sulfanilsäure, 4-Aminobenzoesäure;
4-Methoxyanilin-2-sulfonsäure, 4-Methylanilin-2-sulfonsäure, 4-Methoxyanilin-3-sulfonsäure, 4-Methylanilin-3-sulfonsäure, 4-Chloranilin-2-sulfonsäure, 2-Amino-4-sulfo-benzoesäure, 2-Amino-5-sulfo-benzoesäure, 2-Amino-naphthalin-6-sulfonsäure, 2-Amino-naphthalin-6,8-disulfonsäure, 2-Amino-6-acetylamino-naphthalin-4,8-disulfonsäure, 1-Amino-naphthalin-4-sulfonsäure.

Eine bevorzugte Bedeutung haben die aromatischen Amine (9) der Formeln

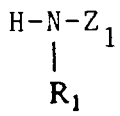 und 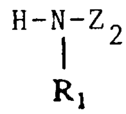

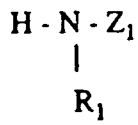 :

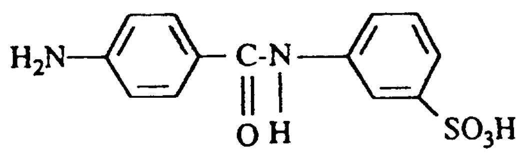

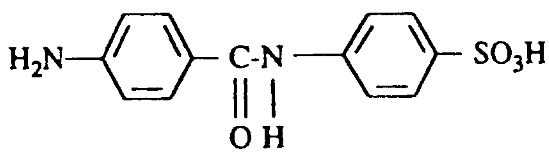

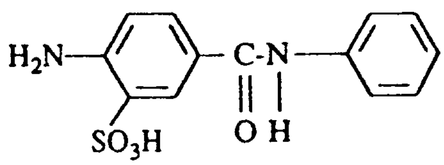

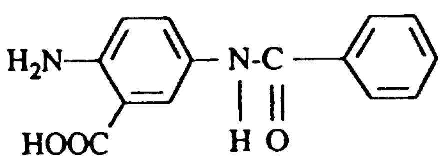

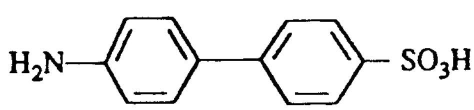

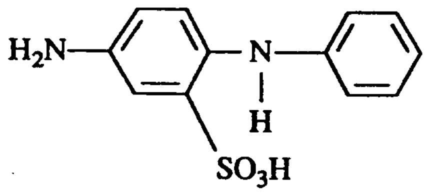

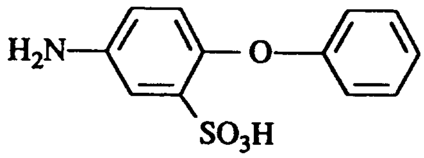

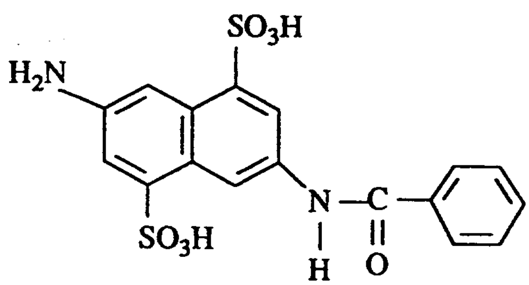

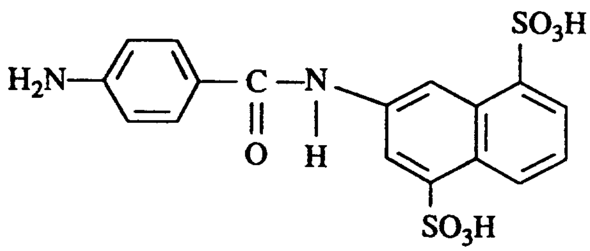

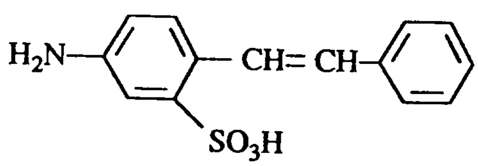

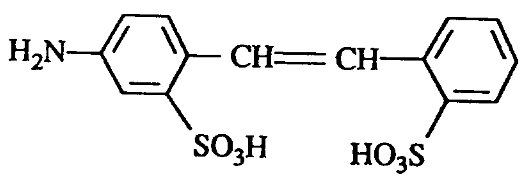

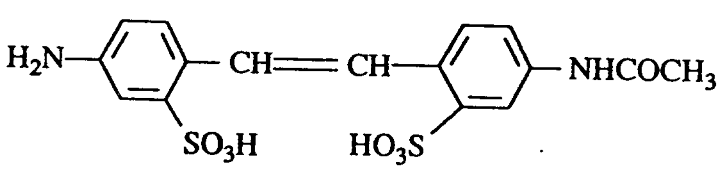

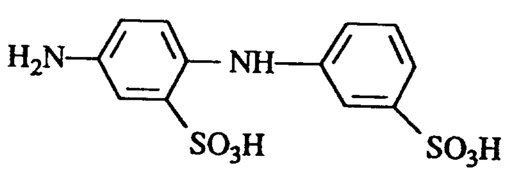

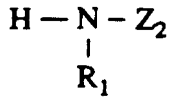 :

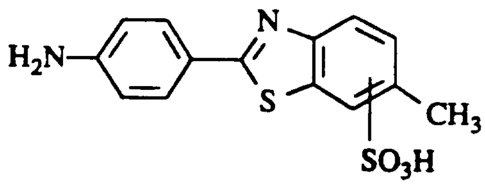

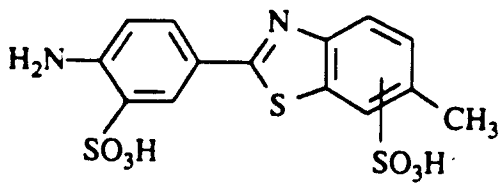

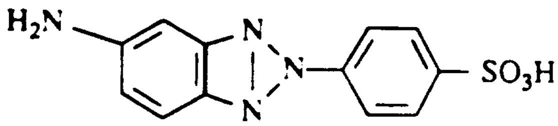

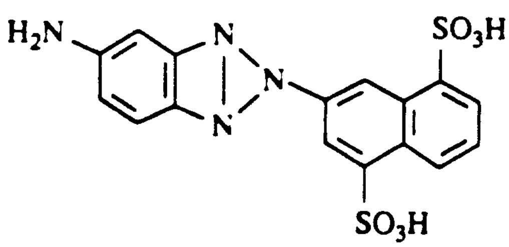

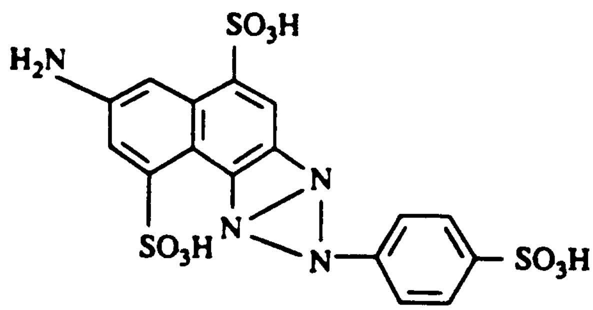

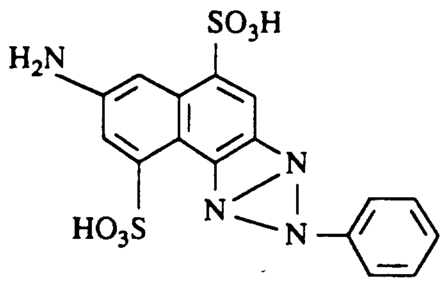

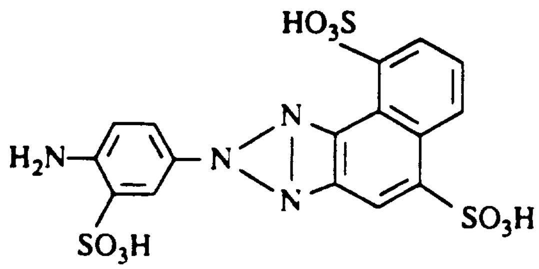

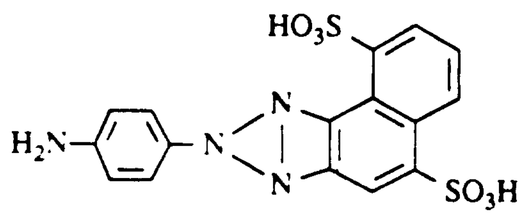

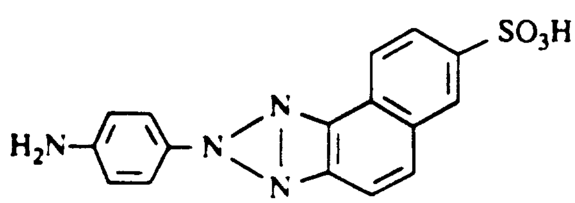

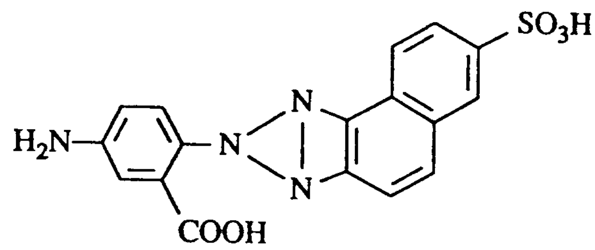

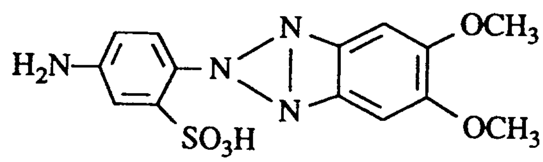

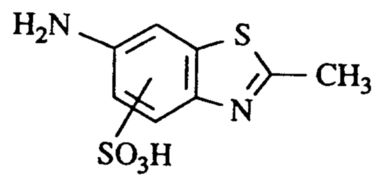

cycloaliphatische Amine $HNR_1Z$ (9):
Cyclohexylamin, Cyclopentylamin;
araliphatische Amine $HNR_1Z$ (9):
Benzylamin, N-Methylbenzylamin, N-Methylbenzylamin-x-sulfonsäure;
ringgeschlossene Amine $HNR_1Z$ (9):
Morpholin, Piperidin, Pyrrolidin, N-Methylpiperazin.

Die Farbstoffe werden z.B. durch Zugabe von Salz isoliert und getrocknet. Es können aber auch die Kondensationslösungen oder Suspensionen über einen Walzen- oder Sprühtrockner geführt werden.

Ebensogut können aus den feuchten Pasten der Farbstoffe konzentrierte, wäßrige Lösungen hergestellt werden, z.B. indem man Suspensionen oder Lösungen dieser Farbstoffe in Wasser einer Entsalzung, z.B. durch Druckpermeation unterwirft.

Die Farbstoffe färben cellulosehaltige Materialien, insbesondere Papier, Baumwolle und Viskose sowie Leder in blauen Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Massen- wie in der Oberflächenfärbung von Papier für geleimte und ungeleimte Sorten, ausgehend von gebleichtem oder ungebleichtem Zellstoff verschiedener Provenienz wie Nadel- oder Laubholz-sulfit- und/oder -sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Die mit den erfindungsgemäßen Farhstoffen erhaltenen Papierfärbungen zeichnen sich durch gute Licht- und Naßechtheit (Ausblutechtheit) aus. Auch auf die Brillanz und Klarheit der Farbtöne ist hinzuweisen. Ferner ist das Kombinationsverhalten mit geeigneten Farbstoffen sehr gut.

Die Formeln der wasserlöslichen Farbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Substituenten in den beiden äußeren aromatischen Ringen des Triphendioxazin-Systems der isomeren Reaktionsprodukte auf das unter Formel (1) gesagte verwiesen wird.

Die Farbstoffe der vorliegenden Erfindung eignen sich auch zum Färben von natürlichen Proteinen wie Wolle , Seide und Leder, sowie synthetischen Polyamiden.

Aus EP-A 0 385 120 sind faserreaktive Dioxazinfarbstoffe bekannt, die am Triazinylring durch Vinylsulfonaminogruppen oder β-substituierte Ethylsulfonaminogruppen substituiert sind.

DE-A-34 23 581 beschreibt Triphendioxazin-Reaktivfarbstoffe, die am Triazinylring durch ein Fluoratom substituiert sind und sich zum Färben und Bedrucken von hydroxyl- und amidgruppenhaltigen Materialien eignen.

Beispiel 1

0,1 Mol 2,9-Diamino-6,13-dichlor-triphendioxazindisulfonsäure (erhalten nach Beispiel 1 der Europäischen Patentschrift 170 838 oder Journal of the Society of Dyers and Colorists Volume 105, page 262-263; der Farbstoff liegt als zweifaches Betain vor) wurden in 2 l Wasser angerührt und mit Lithiumhydroxidlösung neutral gelöst. Man setzte dann 500 g Eis zu, streute 0,1 Mol Cyanurchlorid ein und rührte bei 0 °C bis 5 °C bis nur noch Spuren des Ausgangsmaterials im Dünnschichtchromatogramm zu erkennen waren. Während der Acylierung hielt man durch Zutropfen von Lithiumhydroxidlösung den pH-Wert zwischen pH 4,5 und pH 5,5. Anschließend setzte man 0,1 Mol des Amins der Formel

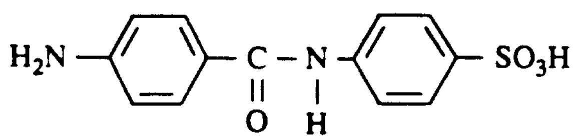

in Form des neutralen Lithiumsalzes zu und erwärmte auf 40 °C bis 50 °C, wobei gleichzeitig die freiwerdende Salzsäure durch Zutropfen von Lithiumhydroxidlösung abgefangen wurde, so daß der pH-Wert bei pH 4,5 bis pH 5,5 lag.

Nach Beendigung dieses Kondensationsschrittes erwärmte man auf 75 °C bis 80 °C und tropfte in dem Maße Morpholin ein, daß der pH-Wert bei pH 8,5 lag. Der Austausch des dritten Chloratoms ist beendet, wenn der pH-Wert sich nicht mehr ändert. Der Farbstoff wurde durch Zugabe von 5 Volumen-% Natriumchlorid ausgesalzen, abgesaugt, bei 90 °C getrocknet und gemahlen. Man erhielt ein, in Wasser mit klarer blauer Farbe lösliches Farbstoffpulver, das Baumwolle nach einem der für substantive Farbstoffe üblichen Färberverfahren in klaren blauen Tönen färbt (Farbkennzahl 13).

Der Farbstoff entspricht der Formel

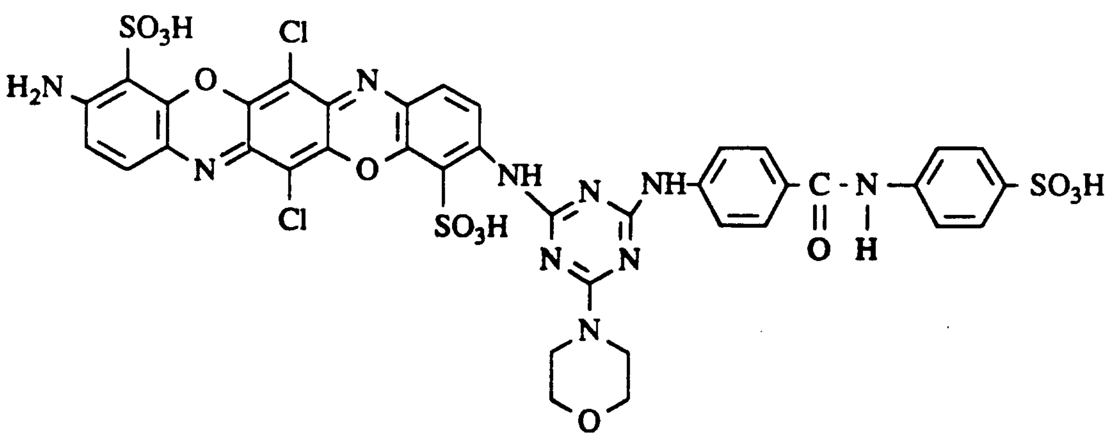

Weitere wertvolle Farbstoffe, die Baumwolle substantiv in klaren blauen Tönen färben (Farbkennzahl 13), erhielt man analog zu den Angaben von Beispiel 1, wenn man den dort verwendeten Farbstoff für den Austausch des ersten Chloratoms am Cyanurchlorid, die in Spalte 1 genannten Amine (I) für den Austausch des zweiten Chloratoms und die in Spalte 2 aufgeführten Amine (II) für den Austausch des dritten Chloratoms verwendete.

| Beispiel | Amine (I) | Amine (II) |
|---|---|---|
| 2 | 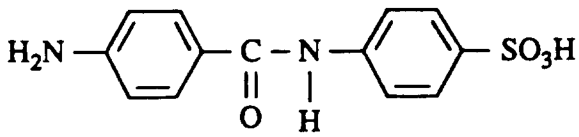 | Ammoniak |
| 3 | " | Ethanolamin |
| 4 | " | Diethanolamin |
| 5 | " | Methylamin |
| 6 | " | N-Methyl-β-hydroxyethylamin |
| 7 | " | Aminolsulfat |
| 8 | " | N-Methyl-β-sulfatoethylamin |
| 9 | " | Aminoessigsäure |
| 10 | " | N-Methylaminoessigsäure |
| 11 | " | β-Aminopropionsäure |
| 12 | " | N-Methylaminomethansulfonsäure |
| 13 | " | Diethylamin |
| 14 | " | Dimethylamin |
| 15 | " | 3-Aminosulfolan |
| 16 | " | Taurin |
| 17 | " | N-Methyltaurin |
| 18 | " | Bis-(2-sulfatoethyl)-amin |
| 19 | " | β-(N-β'-Carboxyethylcarbonylamino)ethylamin |
| 20 | " | 3-Amino-1-propanol |
| 21 | " | 3-Methoxypropylamin |

| Beispiel | Amine (I) | Amine (II) |
|---|---|---|
| 22 | 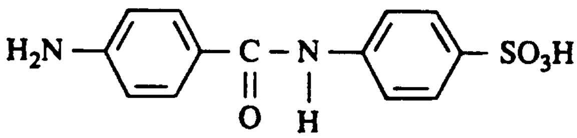 | 3-Ethoxypropylamin |
| 23 | " | 3-Butoxypropylamin |
| 24 | " | 1-Amino-2-propanol |
| 25 | " | 2-(2-Aminoethylamino)-ethanol |

Weitere wertvolle Farbstoffe, die Baumwolle substantiv in klaren blauen Tönen färben (Farbkennzahl 13), erhielt man nach den Angaben von Beispiel 1, wenn man den gleichen Farbstoff und die in den Beispielen 1 bis 25 verwendeten aliphatischen Amine (II) und die nachfolgend genannten Amine (I) einsetzte.

| Beispiel | Amine (I) |
|---|---|
| 26-50 | 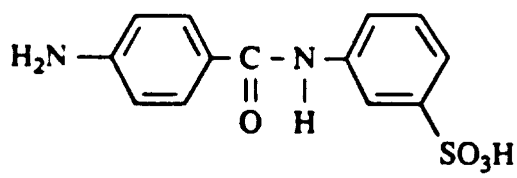 |
| 51-75 | 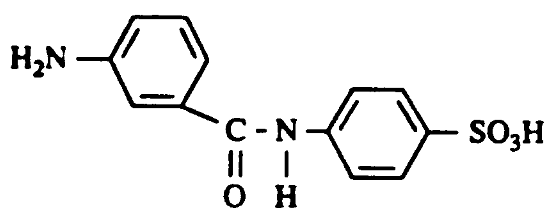 |

| Beispiel | Amine (I) |
|---|---|
| 76-100 | 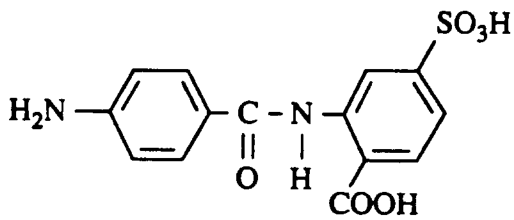 |
| 101-125 | 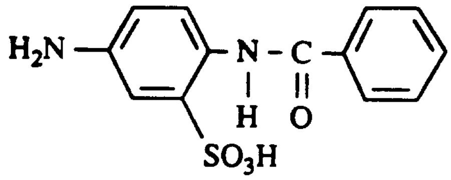 |
| 126-150 | 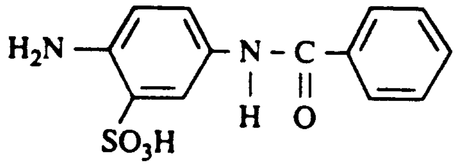 |
| 151-175 | 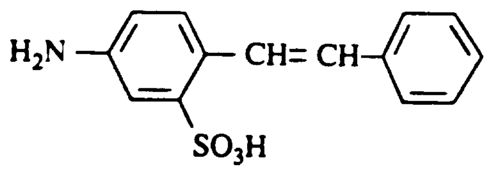 |
| 176-200 | 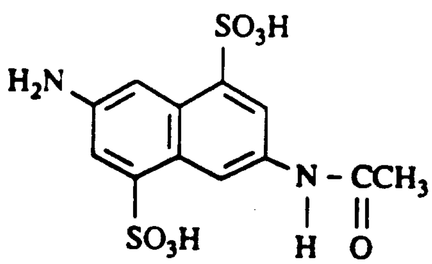 |

| Beispiel | Amine (I) |
|---|---|
| 201-225 | 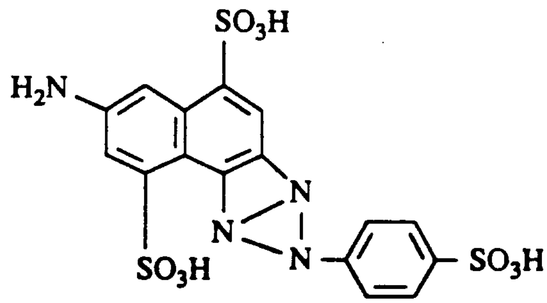 |
| 226-250 | 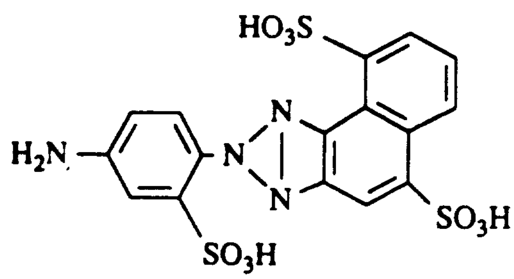 |
| 256-275 | 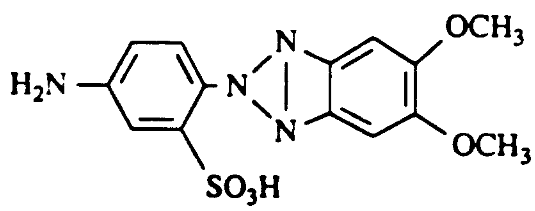 |
| 276-300 | 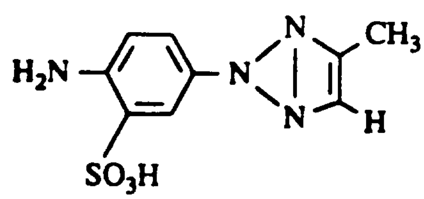 |
| 301-325 | 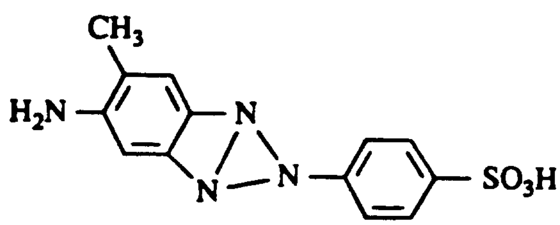 |

| Beispiel | Amine (I) |
|---|---|
| 326-350 | 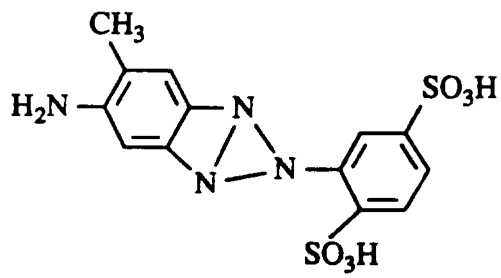 |
| 351-375 | 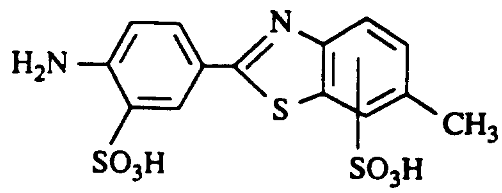 |

| Beispiel | Amine (I) |
|---|---|
| 376-400 | 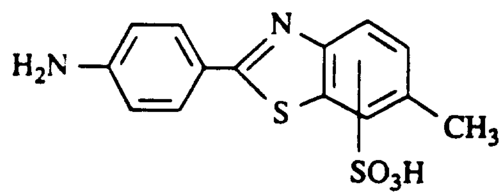 |
| 401-425 | 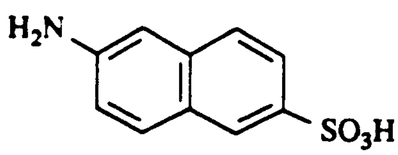 |
| 426-450 | 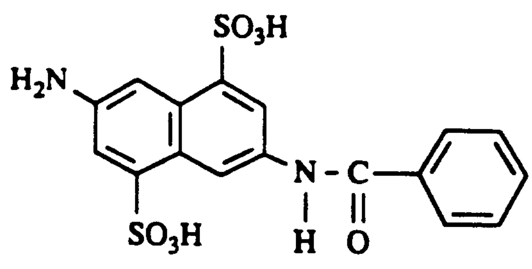 |
| 451-475 | 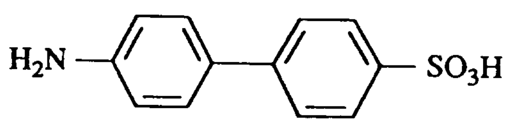 |

Beispiel 476

Man führte zunächst den Austausch des ersten und zweiten Chloratoms analog zu den Angaben von Beispiel 1 aus, anstelle von Morpholin setzte man jedoch für den Austausch des dritten Chloratoms 0,1 Mol m-Sulfanilsäure als neutrales Lithiumsalz zu und erwärmte auf 100 °C bis der Austausch des dritten Chloratoms erfolgt war. Die freiwerdende Salzsäure wurde neutralisiert. Der Farbstoff wurde mit 4 Volumen-% Natriumchlorid ausgesalzen, abgesaugt, getrocknet und gemahlen. Der Farbstoff färbt Baumwolle substantiv in einem klaren Blau (Farbkennzahl 13). Er entspricht der Formel

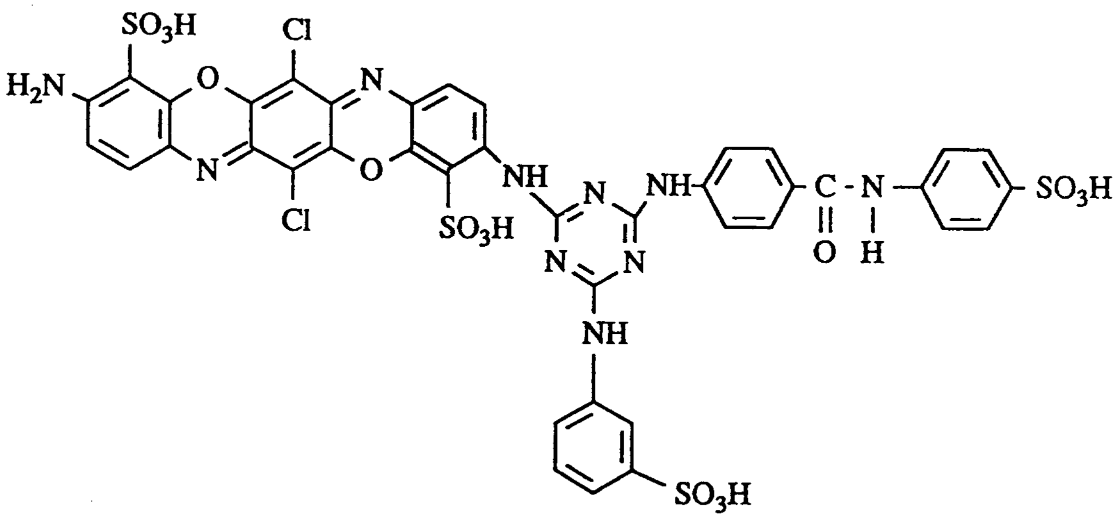

Weitere wertvolle Farbstoffe die Baumwolle in einem klaren Blau (Farbkennzahl 13) färben erhielt man nach den Angaben von Beispiel 476, wenn man für den Austausch des dritten Chloratoms die nachfolgend aufgeführten Amine (IV) verwendete.

| Beispiel | Amine (IV) |
|---|---|
| 477 | Anilin |
| 478 | 4-Amino-benzylsulfonsäure |
| 479 | 4-Methoxyanilin |
| 480 | 3-Aminobenzoesäure |
| 481 | 2-Aminonaphthalin-4,8-disulfonamid |
| 482 | N-(4'-Sulfophenyl)-4-amino-benzoesäureamid |
| 483 | 4-Benzoylamino-1-aminobenzol-3-sulfonsäure |
| 484 | 2-Amino-6-sulfo-naphthalin |

Beispiel 485

Man führte zunächst den Austausch des ersten und zweiten Chloratoms nach den Angaben von Beispiel 1 aus, verwendete jedoch anstelle von Morpholin 0,1 Mol 2-Mercaptoethanol. Man hielt die Temperatur für den Austausch des Halogenatoms bei 75 °C bis 85 °C und den pH-Wert bei pH 7,0 bis 8,0.Nach erfolgtem Austausch wurde der Farbstoff ausgesalzen, abgesaugt, getrocknet und gemahlen. Er färbt Baumwolle substantiv in einem klaren Blau (Farbkennzahl 13).

Der Farbstoff entspricht der Formel

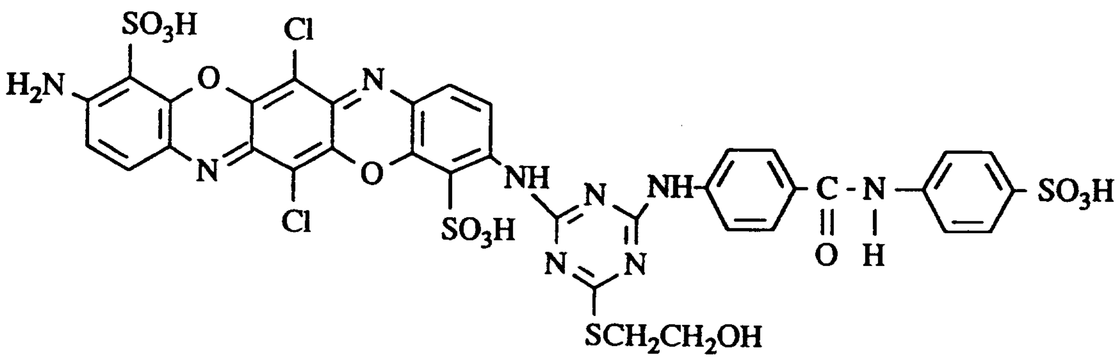

Weitere wertvolle Farbstoffe, die Baumwolle substantiv in einem brillanten Blau färben, erhielt man nach den Angaben von Beispiel 485, wenn man anstelle von Mercaptoethanol eine äquivalente Menge der nachfolgend genannten Mercaptoverbindungen, Phenole und Naphthole verwendete.

| Beispiel | |
|---|---|
| 486 | Mercaptoessigsäure |
| 487 | 2-Mercaptobenzthiazol |
| 488 | 2-Mercaptobenzthiazol-X-sulfonsäure |
| 489 | Phenol |
| 490 | 4-Nitrophenol |
| 491 | 4-Sulfophenol |
| 492 | 2-Hydroxy-naphthalin-6-sulfonsäure |
| 493 | 2-Hydroxy-naphthalin-6,8-disulfonsäure |

Weitere wertvolle Farbstoffe, die Baumwolle substantiv in einem brillanten Blau färben, erhielt man nach den Angaben von Beispiel 1 und Beispiel 485, wenn man für den Austausch des Zweiten Chloratoms die in den Beispielen 26 bis 475 verwendeten Amine (I) und für den Austausch des dritten Chloratoms die in den Beispielen 485 bis 493 verwendeten Mercaptoverbindungen, Phenole und Naphthole einsetzte.

Beispiele 494

Die Acylierung des Farbstoffs mit Cyanurchlorid führte man zunächst nach den Angaben von Beispiel 1 aus. Anschließend stellte man mit Morpholin einen pH-Wert von 8,5 ein, erwärmte auf 30 °C bis 35 °C und hielt dabei durch Zutropfen von weiterem Morpholin den pH-Wert bei 8,5 bis der Austausch des zweiten Halogenatoms erfolgt war. Dann steigerte man die Temperatur auf 75 °C bis 80 °C und hielt durch Zugabe von Morpholin den pH-Wert bei 8,5. Nach Austausch des dritten Chloratoms wurde der Farbstoff ausgesalzen, abgesaugt, getrocknet und gemahlen. Er färbt Baumwolle substantiv in einem Klaren Blau (Farbkennzahl 13) und als saurer Farbstoff Wolle und Polyamid in klaren Blautönen mit guten Echtheiten.

Er entspricht der Formel

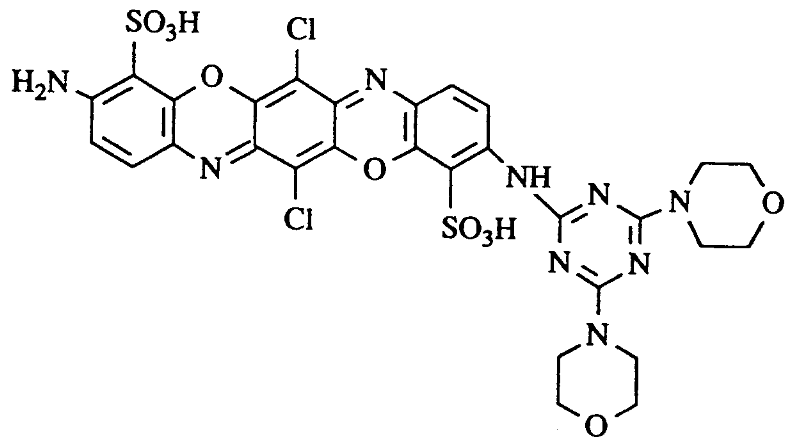

Einen Farbstoff mit ähnlichen Eigenschaften erhielt man, wenn man anstelle von Morpholin Diethanolamin verwendete.

Beispiel 495

0,1 Mol des Triphendioxazinfarbstoffes der Formel (liegt als zweifaches Betain vor)

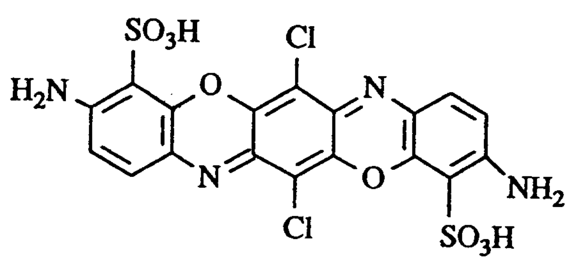

wurden in 1,5 l Wasser angeschlämmt und mit Lithiumhydroxidlösung neutral gelöst. Man gab dann 600 g bis 700 g Eis zu und tropfte 13,5 g Trifluortriazin ein, wobei man durch Zutropfen von Lithiumhydroxidlösung den pH-Wert zwischen 5 und 6 hielt. Gegebenenfalls mußte noch etwas Trifluortriazin nachgesetzt werden. Anschließend gab man 0,1 Mol 2-Amino-6-acetylamino-4,8-disulfonaphthalin zu und ließ die Temperatur auf 15 °C bis 20 °C ansteigen, wobei man den pH-Wert durch Zugabe von Lithiumhydroxidlösung bei pH 5 bis 6 hielt. Nach erfolgtem Austausch des zweiten Fluoratoms erwärmte man auf 50 °C bis 60 °C und tropfte Morpholin bis zu einem pH-Wert von 8,5 ein. Der Austausch des dritten Fluoratoms war beendet, als kein Morpholin mehr verbraucht wurde um den pH-Wert bei 8,5 zu halten. Der Farbstoff wurde ausgesalzen, abgesaugt, getrocknet und gemahlen Er ist identisch mit dem in Beispiel 176 erhaltenen Farbstoff.

Bei der Versuchsdurchführung gemäß den Angaben in Beispiel 1, wurde die 2,9-Diamino-6,13-dichlor-triphendioxazindisulfonsäure durch die äquimolare Menge 2,9-Diamino-6,13-dimethoxy-triphendioxazindisulfonsäure oder 2,9-Diamino-6,13-diethoxytriphendioxazindisulfonsäure ersetzt. Im übrigen erfolgte die Ausführung wie bei den Beispielen 1 bis 475 angegeben Man erhielt gleichfalls substantive Farbstoffe, die Cellulosefasern enthaltendes Material in klaren stark rotstichig blauen Tönen färben.

Beispiel 496

0,7 Mol 2,9-Diamino-6,13-dichlor-triphendioxazindisulfonsäure wurden in 2 l Wasser als neutrales Lithiumsalz gelöst. Man tropfte dann 0,1 Mol 2,4-Dichlor-6-($\beta$-methoxyethoxy)-triazin ein und hielt dabei den pH Wert durch Eintropfen von Lithiumhydroxidlösung zwischen 5 und 6. Die Temperatur lag bei 25 °C bis 30 °C: Nach beendeter Kondensation erwärmte man auf 75 °C bis 80 °C und tropfte Morpholin ein, so daß sich ein pH-Wert von 8,5 einstellte. Der Austausch des zweiten Chloratoms war erfolgt, als kein Morpholin

mehr verbraucht wurde. Anschließend wurde der Farbstoff ausgesalzen, abgesaugt, getrocknet und gemahlen.

Er färbt Wolle oder Polyamidfasern als saurer Farbstoff in einem klaren Blau (Farbkennzahl 13).

Er hat folgende Struktur:

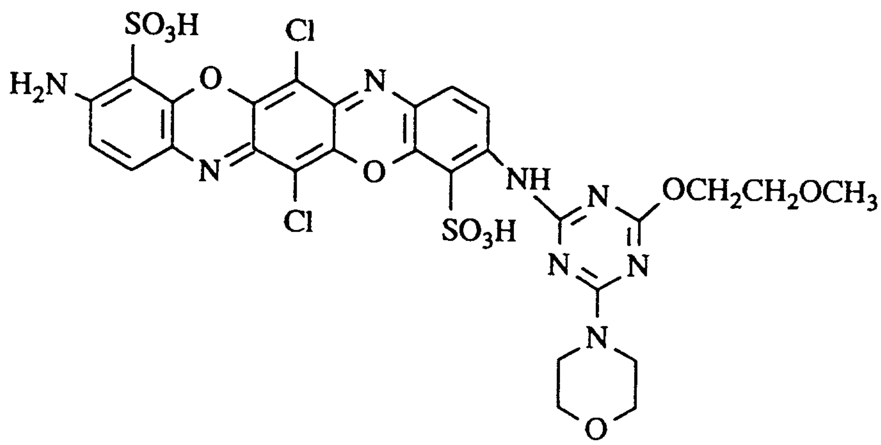

Einen Farbstoff mit ähnlichen Eigenschaften erhielt man nach den Angaben dieses Beispiels, wenn man anstelle von 2,4-Dichlor-6-($\beta$-methoxyethoxy)-triazin eine äquivalente Menge 2,4-Dichlor-triazin oder 2,4-Dichlor-6-methyl-triazin einsetzte.

## Patentansprüche

**1.** Triphendioxazinfarbstoffe der Formel

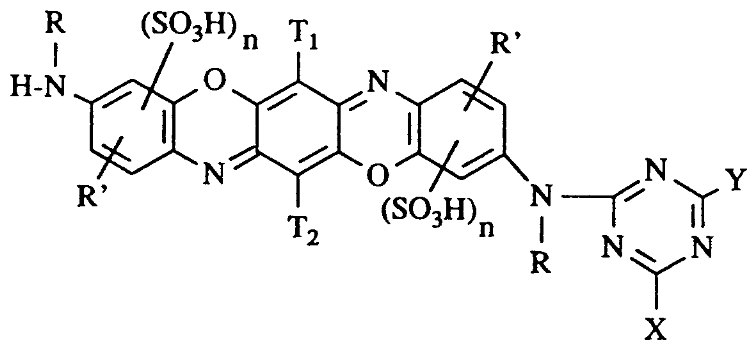

(1)

in welcher

| | |
|---|---|
| R | für Wasserstoff oder gegebenenfalls substituiertes $C_1$-$C_6$-Alkyl steht, |
| R' | für Wasserstoff oder einen Substituenten steht, |
| $T_1$ und $T_2$ | jeweils für Wasserstoff, Chlor, Brom, gegebenenfalls substituiertes $C_1$-$C_4$-Alkyl, gegebenenfalls substituiertes $C_1$-$C_4$-Alkoxy, gegebenenfalls substituiertes Phenyl oder gegebenenfalls substituiertes Phenoxy stehen, |
| Y | für eine gegebenenfalls substituierte Aminogruppe steht, |
| X | für eine jeweils gegebenenfalls substituierte Amino-, Thioether- oder Ethergruppe, für Wasserstoff, gegebenenfalls substituiertes niederes Alkyl oder gegebenenfalls substituiertes Phenyl steht und |
| n | für 0 oder 1 steht, wobei |
| | für den Fall daß n für 1 steht, die Sulfogruppe jeweils in ortho-Stellung zu den Substituenten |

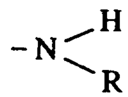 oder 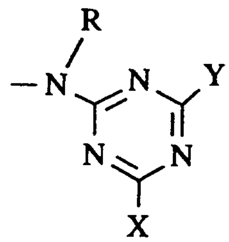

steht,
und wobei für die gegebenenfalls substituierten Aminogruppen in der Definition von X und Y Vinylsulfon und $\beta$-substituiertes Ethylsulfon sowie weiterhin chromophore Reste aus der Azo-, Formazan-, Anthrachinon-, Phthalocyanin- und Dioxazin-Farbstoffreihe als Substituenten ausgenommen sind.

**2.** Farbstoffe gemäß Anspruch 1, in welchen
X für einen Rest der Formel $-S-R_2$ oder $-O-R_3$ steht,
worin
$R_2$ für einen Phenylrest steht, der durch Chlor, Sulfo oder Nitro substituiert sein kann, oder für einen niederen Alkylrest steht, der durch Hydroxy oder Carboxy substituiert sein kann, und
$R_3$ für Wasserstoff, einen niederen Alkylrest oder einen Phenylrest steht, der durch Sulfo oder Carboxy substituiert sein kann.
Weiterhin
X für eine Aminogruppe der Formel

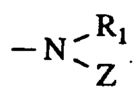

steht,
in welcher
$R_1$ für Wasserstoff oder eine niedere Alkylgruppe steht, die durch eine Carboxy, Sulfato oder Sulfo substituiert sein kann, und
Z für Wasserstoff oder eine niedere Alkylgruppe steht, die durch Hydroxy, Sulfato, Carboxy, Sulfo, niederes Alkoxy, Phenyl oder Cyclohexyl substituiert sein kann,
oder
$R_1$ und Z gemeinsam mit dem Stickstoffatom an welches sie gebunden sind, gegebenenfalls unter Einschluß eines weiteren Heteroatoms einen Ring bilden,
und
Y für

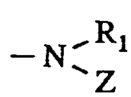

steht,
wobei
$R_1$ für Wasserstoff steht und
Z für Reste $Z_1$ oder $Z_2$ steht,
wobei
$Z_1$ für

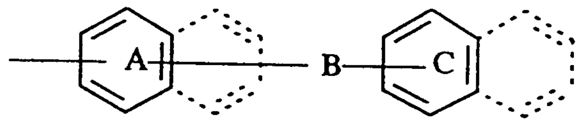

steht,

worin der Phenylen- bzw. Naphthylenrest A und der Phenyl- bzw. Naphthylrest C substituiert sein kann und B für eine direkte Bindung oder ein Brückenglied der Formel

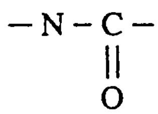 , 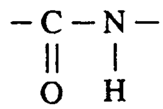 , 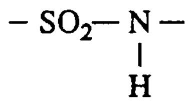 , 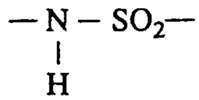 , 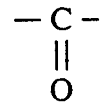 ,

$-SO_2-$ , -S- , -O- ,

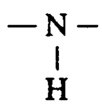 , 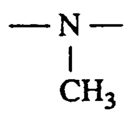 , 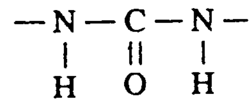 , 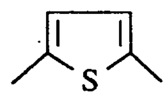 ,

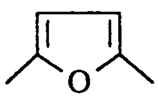 , 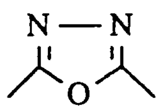 ,

oder -CH=CH-

steht, und

$Z_2$ für

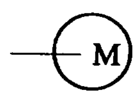

steht,

worin M für den Rest eines mindestens zwei kondensierte 5- oder 6-Ringe enthaltenden heterocyclischen Ringsystems steht.

**3.** Farbstoffe gemäß Anspruch 2 in welchen

$Z_2$ für einen der folgenden Reste steht:

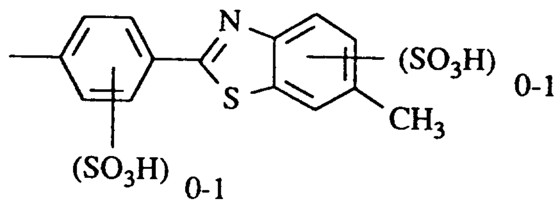

,

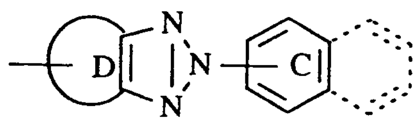

oder

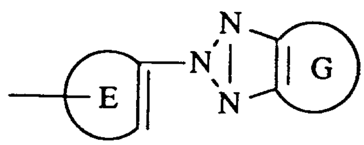

worin

D für den Rest eines gegebenenfalls substituierten Benzol- oder Naphthalinringes steht und der Phenyl- bzw. Naphthylring C substituiert sein kann,

E für einen gegebenenfalls substituierten Phenylen- oder Naphthylenrest und

G für den Rest eines gegebenenfalls substituierten Benzol- oder Naphthalinringes steht

**4.** Farbstoffe gemäß Ansprüchen 2 und 3, dadurch gekennzeichnet, daß der Rest Z eine bis vier wasserlöslichmachende Gruppen enthält.

**5.** Verfahren zur Herstellung der Farbstoffe gemäß Ansprüchen 1 bis 4,
in welchen

X für eine jeweils gegebenenfalls substituierte Amino-, Thioether- oder Ethergruppe steht,

dadurch gekennzeichnet, daß man
1 Mol eines Triphendioxazinfarbstoffes der Formel

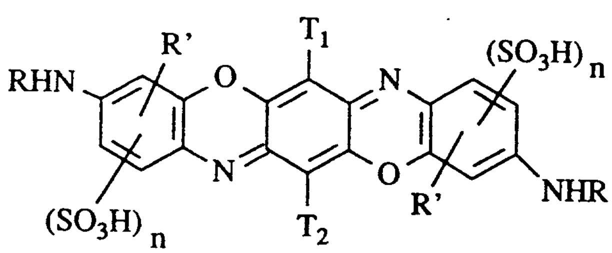

(6)

in welcher

$T_1$, $T_2$, R, R' und n die in Anspruch 1 angegebene Bedeutung haben,

mit einem Mol eines Halogentriazins der Formel

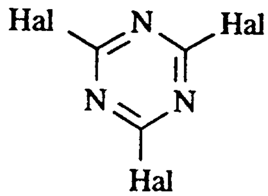

(7)

in welcher

Hal für Fluor, Chlor oder Brom steht,

und mit einem Mol an Verbindung der Formel

$H\text{-}X_1$ (8)

in welcher

$X_1$ für eine jeweils gegebenenfalls substituierte Amino-, Thioether- oder Ethergruppe steht,

sowie mit einem Mol an Verbindung der Formel

H-Y (9)

in welcher

Y die in Anspruch 1 angegebene Bedeutung hat,

in beliebiger Reihenfolge umsetzt

**6.** Verfahren zur Herstellung der Farbstoffe gemäß Ansprüchen 1 bis 4, in welchen

X für Wasserstoff, niederes Alkyl oder gegebenenfalls durch Chlor, Methyl oder Methoxy substituiertes Phenyl steht,

dadurch gekennzeichnet, daß man ein Mol eines Triphendioxazinfarbstoffes der Formel (6) mit einem Mol eines Halogentriazins der Formel (10)

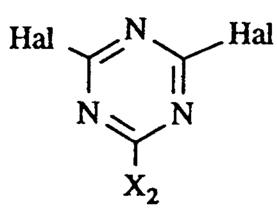

(10)

in welcher

Hal für Fluor, Chlor oder Brom steht und

$X_2$ für Wasserstoff, niederes Alkyl oder gegebenenfalls durch Chlor, Methyl oder Methoxy substituiertes Phenyl steht,

sowie mit einem Mol an Verbindung (9) in beliebiger Reihenfolge umsetzt.

**7.** Verfahren gemäß Ansprüchen 5 und 6, dadurch gekennzeichnet, daß die Triphendioxazinfarbstoffe der Formel (6) in Form ihrer neutralen Alkalisalze eingesetzt werden.

**8.** Verwendung der Farbstoffe gemäß Ansprüchen 1 bis 7 zum Färben natürlicher oder synthetischer hydroxylgruppen- oder amidgruppenhaltiger Materialien.

**9.** Mit Farbstoffen der Ansprüche 1 bis 7 gefärbte natürliche oder synthetische hydroxylgruppen- oder amidgruppenhaltige Materialien.

## Claims

1. Triphendioxazine dyestuffs of the formula

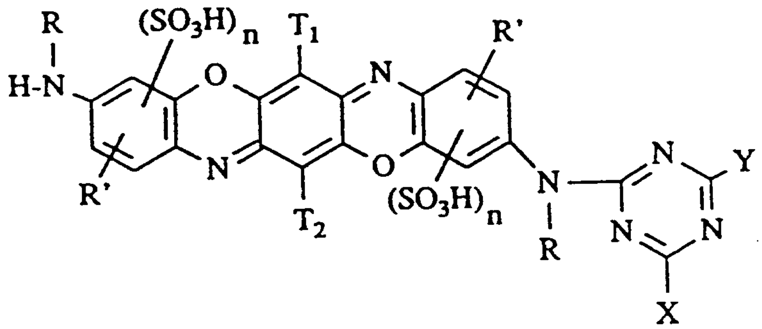

(1)

in which

| | |
|---|---|
| R | represents hydrogen or substituted or unsubstituted $C_1$-$C_6$-alkyl, |
| R' | represents hydrogen or a substituent, |
| $T_1$ and $T_2$ | each represent hydrogen, chlorine, bromine, substituted or unsubstituted $C_1$-$C_4$-alkyl, substituted or unsubstituted $C_1$-$C_4$-alkoxy, substituted or unsubstituted phenyl or substituted or unsubstituted phenoxy, |
| Y | represents a substituted or unsubstituted amino group, |
| X | represents a respectively substituted or unsubstituted amino, thioether or ether group, hydrogen, substituted or unsubstituted lower alkyl or substituted or unsubstituted phenyl and |
| n | represents 0 or 1, where if n represents 1 the sulpho group is in each case in the ortho position relative to the substituents |

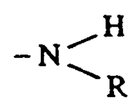

or

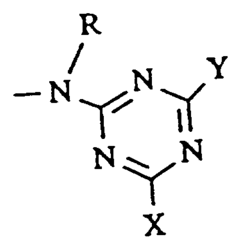

,

and where for the amino groups in the definition of X and Y vinyl sulphone and $\beta$-substituted ethyl sulphone and also chromophoric radicals of the azo, formazan, anthraquinone, phthalocyanine and dioxazine dye series are excluded as substitutents.

2. Dyestuffs according to Claim 1, in which

| | |
|---|---|
| X | represents a radical of the formula -S-$R_2$ or -O-$R_3$, in which |
| $R_2$ | represents a phenyl radical which can be substituted by chlorine, sulpho or nitro, or represents a lower alkyl radical which can be substituted by hydroxyl or carboxyl, and |
| $R_3$ | represents hydrogen, a lower alkyl radical or a phenyl radical which can be substituted by sulpho or carboxyl. |

Furthermore

X represents an amino group of the formula

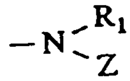

in which

$R_1$ represents hydrogen or a lower alkyl group which can be substituted by a carboxyl, sulphato or sulpho, and

Z represents hydrogen or a lower alkyl group which can be substituted by hydroxyl, sulphato, carboxyl, sulpho, lower alkoxy, phenyl or cyclohexyl,

or

$R_1$ and Z, together with the nitrogen atom to which they are bound, if desired with the inclusion of a further hetero atom, form a ring,

and

Y represents

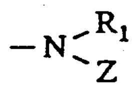 ,

in which

$R_1$ represents hydrogen and

Z represents $Z_1$ or $Z_2$,

in which

$Z_1$ represents

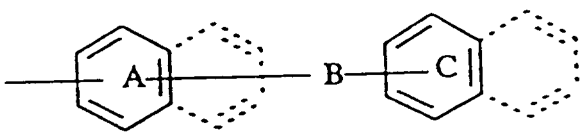 ,

in which the phenylene or naphthylene radical A and the phenyl or naphthyl radical C can be substituted and B represents a direct bond or a bridging member of the formula

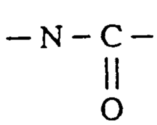 , 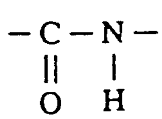 , 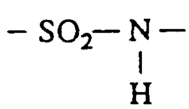 , 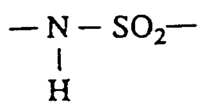 , 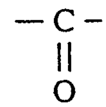 ,

$-SO_2-$ , -S- , -O- ,

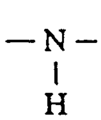 , 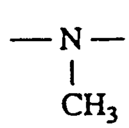 , 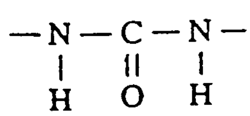 , 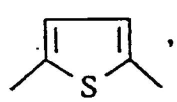 ,

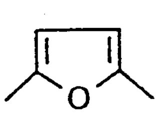 , 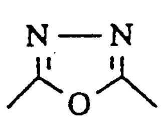 ,

or -CH = CH-
and
$Z_2$ represents

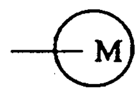 ,

in which M represents the radical of a heterocyclic ring system containing at least two fused 5-membered or 6-membered rings.

**3.** Dyestuffs according to Claim 2, in which
$Z_2$ represents one of the following radicals:

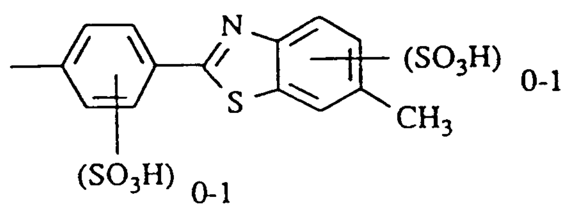 ,

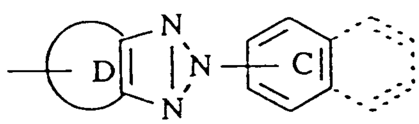 or

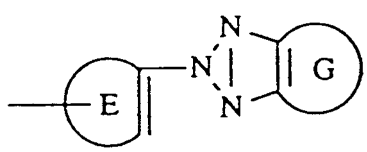 .

in which
D represents the radical of a substituted or unsubstituted benzene or naphthalene ring and the phenyl or naphthyl ring C can be substituted,
E represents a substituted or unsubstituted phenylene or naphthylene radical and
G represents the radical of a substituted or unsubstituted benzene or naphthalene ring.

**4.** Dyestuffs according to Claims 2 and 3, characterized in that the radical Z contains one to four water-solubilizing groups.

**5.** Process for the preparation of the dyes according to Claims 1 to 4,
in which
X represents an amino, thioether or ether group, each of which is substituted or unsubstituted,
characterized in that
one mole of a triphendioxazine dyestuff of the formula

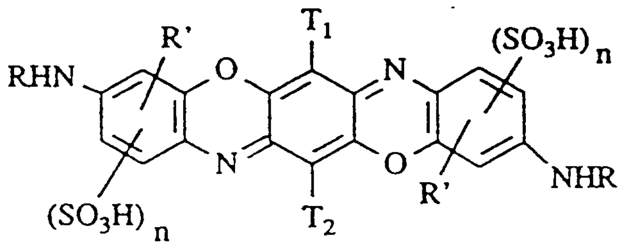

(6)

in which

$T_1$, $T_2$, R, R' and n have the meaning given in Claim 1,

is reacted with one mole of a halogenotriazine of the formula

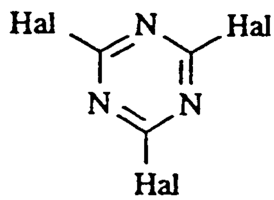

(7)

in which

Hal represents fluorine, chlorine or bromine,

and with one mole of the compound of the formula

$H\text{-}X_1$ (8)

in which

$X_1$ represents an amino, thioether or ether group, each of which is unsubstituted or substituted,

and with one mole of the compound of the formula

H-Y (9)

in which

Y has the meaning given in Claim 1,

in any desired order.

6. Process for the preparation of the dyestuffs according to Claims 1 to 4, in which

X represents hydrogen, lower alkyl or phenyl which is unsubstituted or substituted by chlorine, methyl or methoxy,

characterized in that one mole of a triphendioxazine dyestuff of the formula (6) is reacted with one mole of a halogenotriazine of the formula (10)

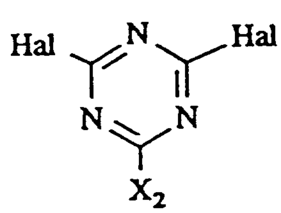

(10)

in which

Hal represents fluorine, chlorine or bromine and

$X_2$ represents hydrogen, lower alkyl or phenyl which is unsubstituted or substituted by chlorine, methyl or methoxy,

and with one mole of compound (9) in any desired order.

7. Process according to Claims 5 and 6, characterized in that the triphendioxazine dyestuffs of the formula (6) are used in the form of their neutral alkali metal salts.

8. Use of the dyestuffs according to Claims 1 to 7 for the dyeing of natural or synthetic hydroxyl- or amido-containing materials.

9. Natural or synthetic hydroxyl- or amido-containing materials dyed with the dyestuffs of Claims 1 to 7.

## Revendications

1. Colorants de la série de la triphénodioxazine, de formule:

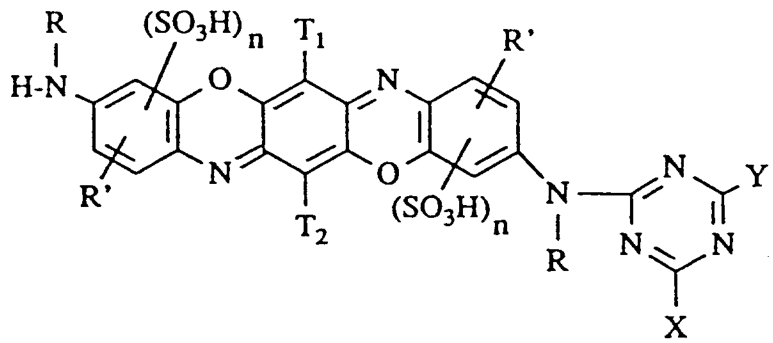

(1)

dans laquelle
R représente un atome d'hydrogène ou un groupe alkyle en $C_1$ à $C_6$, éventuellement substitué,
R' représente un atome d'hydrogène ou un substituant,
$T_1$ et $T_2$ représentent chacun un atome d'hydrogène, de chlore, de brome, un groupe alkyle en $C_1$ à $C_4$ éventuellement substitué, alcoxy en $C_1$ à $C_4$ éventuellement substitué, phényle éventuellement substitué ou phénoxy éventuellement substitué,
Y représente un groupe amino éventuellement substitué,
X représente un groupe amino, thioéther ou éther, éventuellement substitué, un atome d'hydrogène, un groupe alkyle inférieur éventuellement substitué ou un groupe phényle éventuellement substitué, et
n vaut 0 ou 1, et,
si n vaut 1, le groupe sulfo est à chaque fois en position ortho par rapport aux substituants :

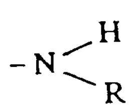

ou

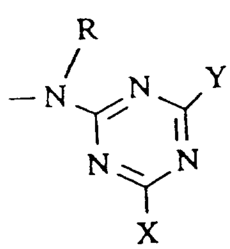

et, dans le cas des groupes amino éventuellement substitués figurant dans la définition de X et de Y, il y a lieu d'exclure un groupe vinylsulfone et éthylsulfone substitués en $\beta$ ainsi que, en outre, des restes chromophores de la série des colorants azoïques, du formazane, anthraquinoniques, de la phtalocyanine et de la dioxazine, à titre de substituants.

2. Colorants selon la revendication 1, dans lesquels :
X représente un reste de formule :

$-S-R_2$ ou $-O-R_3$, et

$R_2$ représente un reste phényle, qui peut être substitué par du chlore, par un reste sulfo ou nitro, ou bien $R_2$ représente un reste alkyle inférieur, qui peut être substitué par un groupe hydroxy ou carboxy, et

$R_3$ représente un atome d'hydrogène, un reste alkyle inférieur ou un reste phényle, qui peut être substitué par un reste sulfo ou carboxy, et

X représente en outre un groupe amino de formule :

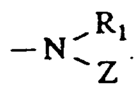

dans laquelle

$R_1$ représente un atome d'hydrogène ou un groupe alkyle inférieur, qui peut être substitué par un groupe carboxy, sulfato ou sulfo, et

Z représente un atome d'hydrogène ou un groupe alkyle inférieur, qui peut être substitué par un groupe hydroxy, sulfato, carboxy, sulfo, alcoxy inférieur, phényle ou cyclohexyle, ou bien

$R_1$ et Z forment, avec l'atome d'azote auquel ils sont reliés, un noyau formé éventuellement avec inclusion d'un autre hétéroatome, et,

Y représente :

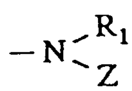

formule dans laquelle

$R_1$ représente un atome d'hydrogène et

Z représente les restes $Z_1$ ou $Z_2$, et

$Z_1$ représente :

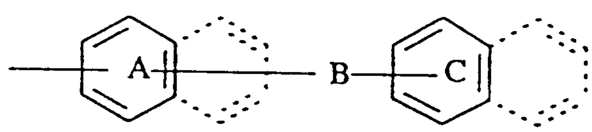

formule dans laquelle le reste phénylène ou naphtylène A et le reste phényle ou naphtyle C peuvent être subsitués, et B représente une liaison directe ou un terme de pontage de formule :

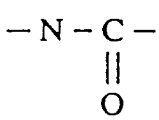 , 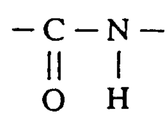 , 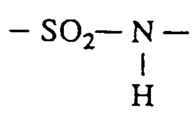 , 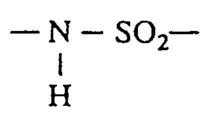 , 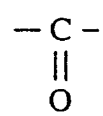 ,

$-SO_2-$ , -S- , -O- ,

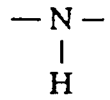 , 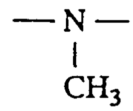 , 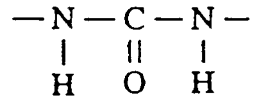 , 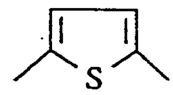 ,

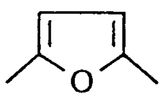 , 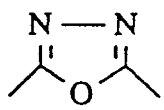 ,

ou -CH = CH- , et
$Z_2$ représente :

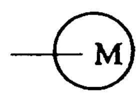

formule dans laquelle
M représente le reste d'un système hétérocyclique contenant au moins deux noyaux pentagonaux ou hexagonaux condensés.

**3.** Colorants selon la revendication 2, dans lesquels
$Z_2$ représente l'un des restes suivants :

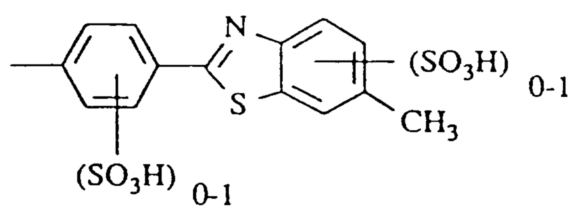 ,

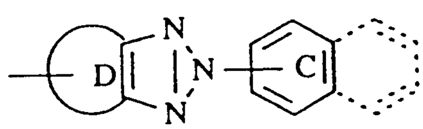 ou

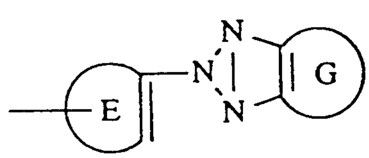

formules dans lesquelles
D représente le reste d'un noyau benzénique ou naphtalénique éventuellement substitué et le noyau phényle ou naphtyle C peut être substitué,
E représente un reste phénylène ou naphtylène éventuellement substitué, et
G représente le reste d'un noyau benzénique ou naphtalénique éventuellement substitué.

**4.** Colorants selon les revendications 2 et 3, caractérisés en ce que le reste Z contient 1 à 4 groupes de solubilisation dans l'eau.

**5.** Procédé pour préparer des colorants selon les revendications 1 à 4, dans lesquels X représente un groupe amino, thioéther ou éther éventuellement substitués, procédé caractérisé en ce qu'on fait réagir dans un ordre quelconque 1 mol d'un colorant de la série de la triphénodioxazine, de formule :

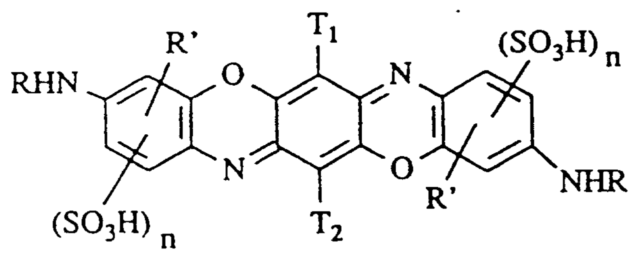

(6)

dans laquelle
$T_1$, $T_2$, R, R' et n ont le sens indiqué à la revendication 1,
avec 1 mol d'une halogénotriazine de formule :

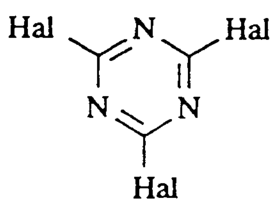

(7)

dans laquelle
Hal représente un atome de fluor, de chlore ou de brome,
et avec 1 mol d'un composé de formule :

$H\text{-}X_1$ (8)

dans laquelle
$X_1$ représente un groupe amino, thioéther ou éther éventuellement substitués, ainsi qu'avec 1 mol du composé de formule :

H-Y (9)

dans laquelle
Y a le sens indiqué à la revendication 1.

**6.** Procédé de préparation de colorants selon la revendication 1 à 4, dans lesquels X représente un atome d'hydrogène, un groupe alkyle inférieur ou un groupe phényle (éventuellement substitué par du chlore, par un reste méthyle ou méthoxy),
procédé caractérisé en ce qu'on fait réagir dans un ordre quelconque 1 mol d'un colorant de la série de la triphénodioxazine de formule (6) avec 1 mol d'une halogénotriazine de formule (10) :

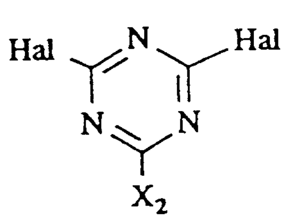

(10)

dans laquelle
Hal représente un atome de fluor, de chlore ou de brome, et
$X_2$ représente un atome d'hydrogène, un groupe alkyle inférieur ou un groupe phényle (éventuellement substitué par du chlore, par un groupe méthyle ou méthoxy), ainsi qu'avec 1 mol de composé (9).

**7.** Procédé selon les revendications 5 et 6, caractérisé en ce qu'on utilise sous forme de leurs sels alcalins neutres les colorants de la série de la triphénodioxazine de formule (6).

**8.** Utilisation des colorants selon les revendications 1 à 7 pour colorer des matières naturelles ou synthétiques contenant des groupes hydroxyles ou amides.

**9.** Matières naturelles ou synthétiques, contenant des groupes hydroxyles ou amides, teintes à l'aide de colorants selon les revendications 1 à 7.